# EUROPEAN PATENT SPECIFICATION

(11) **EP 2 842 808 B1**
(45) Date of publication and mention of the grant of the patent: **25.05.2016**
(21) Application number: 14179074.1
(22) Date of filing: 30.07.2014
(51) Int. Cl.: B60R 9/06, B60R 11/06, B62D 49/06, B62D 49/08

(54) **Mounting assembly for mounting a detachable article to an utility vehicle**
Befestigungsanordnung zum Montieren eines lösbaren Gegenstandes an einem Nutzfahrzeug
Ensemble de montage pour monter un article amovible sur un véhicule utilitaire

(30) Priority: 30.08.2013 US 201314015137
(43) Date of publication of application: 04.03.2015
(73) Proprietor: Deere & Company, Moline, IL 61265 (US)
(72) Inventor: Klein, Arthur L, Cedar Falls, IA Iowa 50613 (US); Carroll, Curtis, Ankeny, IA Iowa 50021 (US); Fleischmann, Aron, Huxley, IA Iowa 50124 (US)
(74) Representative: Dehnhardt, Florian Christopher

(56) References cited:
- EP-A1- 2 380 804
- US-B2- 6 595 397

## Description

The present invention relates to a mounting assembly for mounting a detachable article to an utility vehicle.

Detachable articles, such as storage containers, are often externally mounted to utility vehicles. Such detachable articles can be used as toolboxes, for storage of the tools necessary for maintenance of the utility vehicle, and for storage of tools for installation tasks and minor repairs. Since such toolboxes are attached to the exterior sides of the utility vehicle, and because of the small amount of available space, known toolboxes are relatively small and permit only a few tools to be stored. When the utility vehicle is away from where it is usually kept for extended periods, many items that should be brought along cannot be or must be accommodated elsewhere, since there is no room in the toolbox. Such items may include chains, attachment devices, spare parts, a large hammer, protective clothing, and rubber boots.

Modern agricultural tractors utilize most of the space that traditional toolboxes would normally mount. Customers demand a larger toolbox to carry many tools and larger items like log chains. Certain forward mount toolbox designs take the space that is normally reserved for suitcase weights. This limits the ability to ballast the agricultural tractor properly.

K & M Manufacturing Corporation provides a variety of weight or ballast boxes. Some of the weight box models are mounted ahead of the ballast weights and are supported by brackets which are coupled to the ballast weights. Some other weight box models are mounted in place of the ballast weights and are supported by brackets which are hooked to the ballast weight support arm. In all these designs, the brackets are fixedly attached to the box and the separation between the boxes is not adjustable.

Furthermore, from US 6 595 397 B2 a mounting assembly according to the preamble of claim 1 is known. In this mounting assembly a detachable article is mounted in front of a ballast weight. A mounting bar projects from a rear wall of the detachable article and into a forward opening recess formed in the ballast weight. The mounting bar is coupled to the ballast weight by a pin which extends vertically through bores in the ballast weight and a bore in the mounting bar. As a result, at least some of the ballast weights must be modified or adapted to receive and couple to the mounting bar.

What is needed in the art is an improved mounting assembly which is adapted to the constricted space requirements of current production utility vehicles.

This and other objects are achieved by the present invention, wherein a mounting assembly for mounting a detachable article to an utility vehicle, in particular an agricultural tractor, is provided. The mounting assembly comprises a plate and a weight support adapted to be mounted to the utility vehicle, the plate being spaced apart from the weight support. A coupling member is attached to the plate. A pair of first and second brackets is provided, each of the first and second brackets having a forward end coupled to the coupling member and having a rear end coupled to the weight support, and each of the first and second brackets being movably coupled to the coupling member so that a spacing between the first and second brackets is adjustable. The horizontally and laterally extending weight support is adapted to be mounted to the exterior of the utility vehicle. The weight support is adapted to support a plurality of ballast weights thereon.

The mounting assembly can mount a front mounted toolbox to the weight support and can be mounted with preferably a minimum of four, and up to a full rack of "suitcase" type ballast weights. The first and second brackets mount to the weight support in the same fashion that the ballast weights mount. The first and second brackets are coupled to a back portion of the detachable article and hold the detachable article forward of the ballast weights.

For a complete understanding of the objects, techniques, and structure of the invention reference should be made to the following detailed description and accompanying drawings, wherein similar components are designated by identical reference numerals:
- Fig. 1: is a top left side perspective view of a mounting assembly embodying the invention mounted on a weight support bar supporting ballast weights,
- Fig. 2: is another perspective view of the mounting assembly of Fig. 1 shown with a reduced number of ballast weights,
- Fig. 3: is a bottom right side perspective view of the mounting assembly of Fig. 1 with removed weight support bar,
- Fig. 4: is a perspective view of an alternative embodiment of the mounting assembly embodying the invention, and
- Fig. 5: is another perspective view of the mounting assembly of Fig. 4.

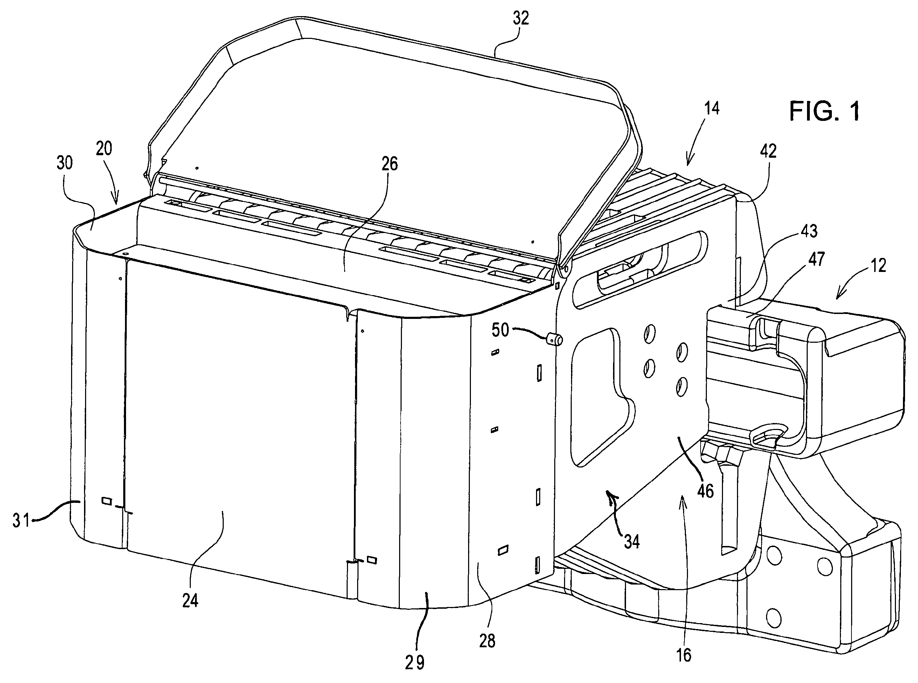

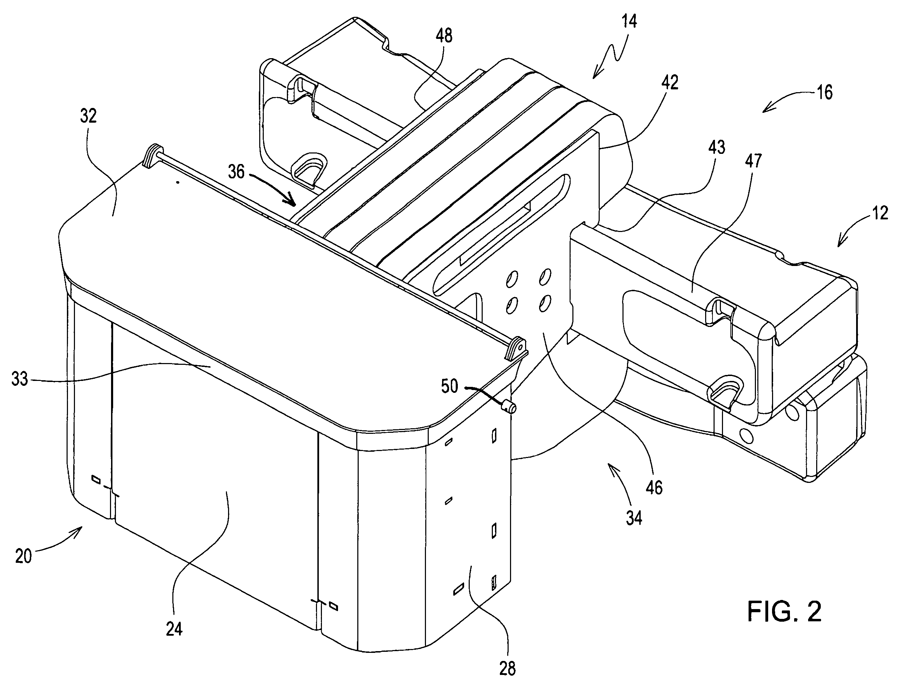

Referring to Figs. 1 and 2, a conventional horizontally and laterally extending weight bar or weight support 12 is adapted to be mounted at an end of an utility vehicle, such as at the front or forward end of an agricultural tractor (not shown). The weight support 12 supports a plurality of conventional ballast weights 14.

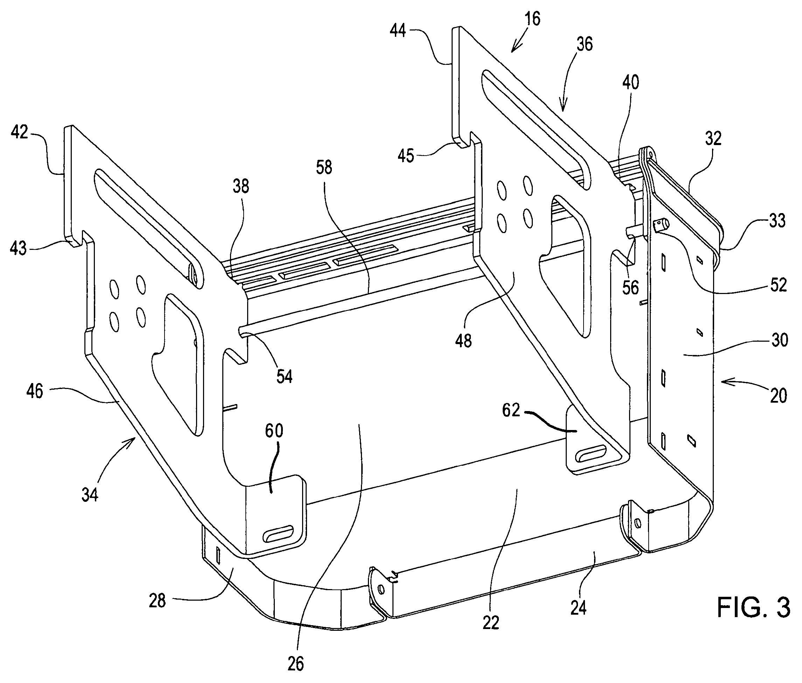

A mounting assembly 16 is mounted to the weight support 12. The mounting assembly 16 supports a detachable article 20 such as a toolbox, which is positioned outwardly and preferably outboard of the ballast weights 14. As best seen in Figs. 2 and 3, the mounting assembly 16 includes a pair of first and second brackets 34, 36 and a plate 26. Each of the first and second brackets 34, 36 has a respective forward end 38, 40 coupled to the plate 26, a respective rear end 42, 44 coupled to the weight support 12, and a respective body 46, 48. The rear ends 42, 44 form hooks 43, 45 which are hooked over a lip 47 which is formed on the weight support 12. The body 46, 48 is adapted to be placed adjacent to at least one of the ballast weights 14. Alternatively, each of the first and second brackets 34, 36 may be sandwiched between adjacent pairs of ballast weights 14, or spaced apart therefrom if only a few ballast weights 14 are mounted on the weight support 12.

Furthermore, the detachable article 20 includes a bottom wall 22, a door or front end wall 24, a back end wall formed by the plate 26, a first side wall 28, a second side wall 30 and a lid 32. The lid 32 has a lip 33 which overlaps and surrounds an upper edge of plate 26 and walls 24, 28 and 30. First and second side walls 28 and 30 are bent to form curved corners 29 and 31, and mate with the corresponding sides of the front end wall 24. A back first corner of the lid 32 is pivotally coupled to a back top corner of the first side wall 28, and a back second corner of the lid 32 is pivotally coupled to a back top corner of the second side wall 30. Plate 26 faces towards the weight support 12.

Each forward end 38, 40 of the first and second brackets 34, 36 is spaced apart inwardly from a corresponding one of the first and second side walls 28, 30. A first side wall mounting bore 50 is formed in the first side wall 28, and a second side wall mounting bore 52 is formed in the second side wall 30. A first bracket bore 54 is formed in the first bracket 34, and a second bracket bore 56 is formed in the second bracket 36. A rod or coupling member 58 extends horizontally through all these bores 50, 52, 54 and 56 to attach or couple the first and second side walls 28, 30 and thus, the detachable article 20, to the first and second brackets 34, 36. Each of the first and second brackets 34, 36 includes a flange 60, 62 which extends laterally towards each other from a lower front potion of the body 46, 48. Each flange 60, 62 engages a lower portion of the plate 26. The coupling member 58 is coupled to and spaced apart from the plate 26, and the first and second brackets 34, 36 slidably engage the coupling member 58, and the separation between the first and second brackets 34, 36 can be adjusted. Because of this adjustability, different numbers of ballast weights 14 can be placed between the spaced apart first and second brackets 34, 36. As best seen in Fig. 2, the brackets 34, 36 can be placed closer together with fewer, such as four, ballast weights 14 sandwiched therebetween.

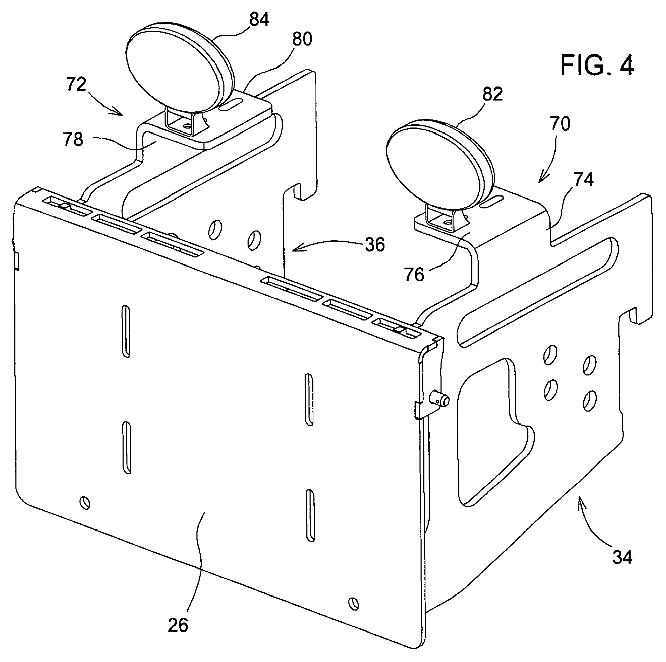

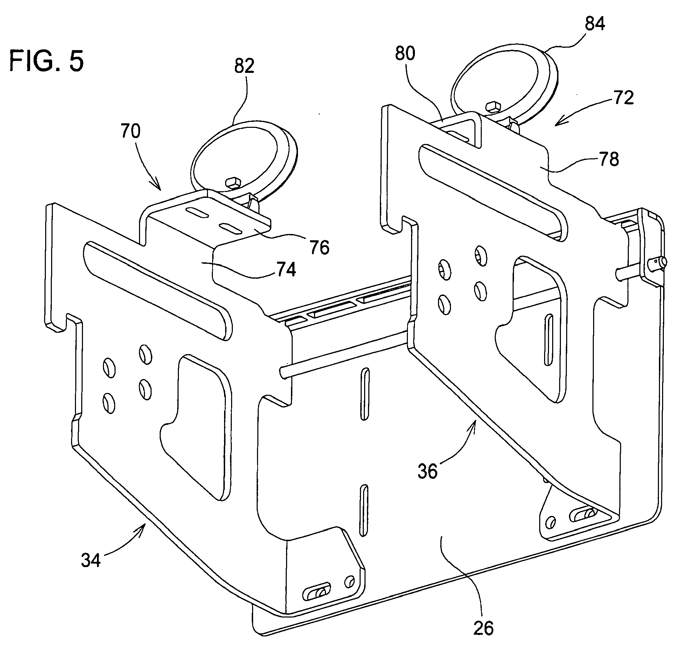

Referring now to Figs. 4 and 5, each of the first and second brackets 34, 36 may also include a corresponding support flange 70, 72 which is mounted on an upper edge thereof. Support flange 70 has a vertical leg 74 and a horizontal leg 76 which extends horizontally from an upper end of vertical leg 74 and towards support flange 72. Support flange 72 has a vertical leg 78 and a horizontal leg 80 which extends horizontally from an upper end of vertical leg 78 and towards support flange 70. Various items can be mounted on or supported by the flanges 70, 72. For example, lighting units 82, 84 can be mounted thereon. Alternatively, a shelf member (not shown) can be mounted on the flanges 70, 72. Alternatively, a mounting assembly can be formed which combines the flanges 70, 72 together with detachable article 20.

The result is a mounting assembly 16 which can be used with standard unmodified ballast weights 14. The mounting assembly 16 can be used to support a detachable article 20 like a front mounted toolbox on an agricultural tractor fitted with front mounted suitcase weights. The mounting assembly 16 could be used to mount items other than a front mounted toolbox. For example, the mounting assembly 16 could be used to mount small fluid tanks or other accessories. The mounting assembly 16 could also be used to mount a vertical plate which could have mounting holes for a variety of components and accessories.

## Claims

1. A mounting assembly for mounting a detachable article to an utility vehicle, in particular an agricultural tractor, the mounting assembly (16) comprising a weight support (12) adapted to be mounted to the utility vehicle, the mounting assembly being **characterized by** further comprising a plate (26), the plate (26) being spaced apart from the weight support (12); a coupling member (58) attached to the plate (26); and a pair of first and second brackets (34, 36), each of the first and second brackets (34, 36) having a forward end (38, 40) coupled to the coupling member (58) and having a rear end (42, 44) coupled to the weight support (12), and each of the first and second brackets (34, 36) being movably coupled to the coupling member (58) so that a spacing between the first and second brackets (34, 36) is adjustable.

2. The mounting assembly according to claim 1, **characterized in that** the coupling member (58) is spaced apart from the plate (26), and each of the first and second brackets (34, 36) slidably engages the coupling member (58).

3. The mounting assembly according to claim 1 or 2, **characterized in that** the coupling member (58) comprises a rod.

4. The mounting assembly according to claims 1 to 3, **characterized in that** the detachable article (20) comprises first and second side walls (28, 30) joined to opposite sides of the plate (26), wherein a first side wall mounting bore (50) is formed in the first side wall (28), a second side wall mounting bore (52) is formed in the second side wall (30), a first bracket bore (54) is formed in the first bracket (34), a second bracket bore (56) is formed in the second bracket (36), the coupling member (58) extends through all said bores (50, 52, 54, 56) to attach the first and second side walls (28, 30) to the first and second brackets (34, 36).

5. The mounting assembly according to claims 1 to 4, **characterized in that** each of the first and second brackets (34, 36) includes a flange (60, 62) which extends laterally from a lower front portion of the first and second brackets (34, 36), the flange (60, 62) engaging a lower portion of the plate (26).

6. The mounting assembly according to claims 1 to 5, **characterized in that** the forward end (38, 40) is spaced apart inwardly from a corresponding one of the first and second side walls (28, 30).

7. The mounting assembly according to claims 1 to 6, wherein the coupling member (58) is spaced apart from the plate (26).

8. The mounting assembly according to claims 1 to 7, **characterized in that** each of the first and second brackets (34, 36) having a body (46, 48) which is adapted to be adjacent to at least one ballast weight (14) supported by the weight support (12).

9. The mounting assembly according to claim 8, **characterized in that** each of the first and second brackets (34, 36) is sandwiched between an adjacent pair of ballast weights (14).

10. The mounting assembly according to claims 1 to 9, **characterized in that** a supporting flange (70, 72) is attached to an upper edge of each of the first and second brackets (34, 36), wherein a corresponding lighting unit (82, 84) is mounted on the supporting flanges (70, 72).

## Patentansprüche

1. Befestigungsanordnung zum Montieren eines lösbaren Gegenstands an einem Nutzfahrzeug, insbesondere an einem landwirtschaftlichen Traktor, wobei die Befestigungsanordnung (16) eine Gewichtsabstützung (12) umfasst, die zum Montieren am Nutzfahrzeug ausgebildet ist, und wobei die Befestigungsanordnung **dadurch gekennzeichnet ist, dass** sie weiterhin eine Platte (26), wobei die Platte (26) von der Gewichtsabstützung (12) beabstandet ist, sowie ein an der Platte (26) befestigtes Verbindungselement (58) und ein Paar erste und zweite Konsolen (34, 36) umfasst, wobei jede der ersten und zweiten Konsolen (34, 36) ein mit dem Verbindungselement (58) gekoppeltes vorderes Ende (38, 40) und ein mit der Gewichtsabstützung (12) gekoppeltes hinteres Ende (42, 44) hat, und wobei jede der ersten und zweiten Konsolen (34, 36) bewegbar mit dem Verbindungselement (58) so gekoppelt ist, dass ein Abstand zwischen der ersten und zweiten Konsole (34, 36) einstellbar ist.

2. Befestigungsanordnung nach Anspruch 1, **dadurch gekennzeichnet, dass** das Verbindungselement (58) von der Platte (26) beabstandet ist und jede der ersten und zweiten Konsolen (34, 36) in gleitender Weise in das Verbindungselement (58) eingreift.

3. Befestigungsanordnung nach Anspruch 1 oder 2, **dadurch gekennzeichnet, dass** das Verbindungselement (58) einen Stab umfasst.

4. Befestigungsanordnung nach Anspruch 1 bis 3, **dadurch gekennzeichnet, dass** der lösbare Gegenstand (20) erste und zweite Seitenwände (28, 30) umfasst, die mit gegenüberliegenden Seiten der Platte (26) verbunden sind, wobei eine erste Seitenwandmontagebohrung (50) in der ersten Seitenwand (28), eine zweite Seitenwandmontagebohrung (52) in der zweiten Seitenwand (30), eine erste Konsolenbohrung (54) in der ersten Konsole (34), eine zweite Konsolenbohrung (56) in der zweiten Konsole (36) ausgebildet sind, wobei sich das Verbindungselement (58) durch alle Bohrungen (50, 52, 54, 56) erstreckt, um die ersten und zweiten Seitenwände (28, 30) an den ersten und zweiten Konsolen (34, 36) zu befestigen.

5. Befestigungsanordnung nach Anspruch 1 bis 4, **dadurch gekennzeichnet, dass** jede der ersten und zweiten Konsolen (34, 36) einen Flansch (60, 62) beinhaltet, der sich seitlich von einem unteren Vorderabschnitt der ersten und zweiten Konsolen (34, 36) aus erstreckt, wobei der Flansch (60, 62) in einen unteren Abschnitt der Platte (26) eingreift.

6. Befestigungsanordnung nach Anspruch 1 bis 5, **dadurch gekennzeichnet, dass** das vordere Ende (38, 40) im Innern von einer entsprechenden Seitenwand der ersten und zweiten Seitenwände (28, 30) beabstandet ist.

7. Befestigungsanordnung nach Anspruch 1 bis 6, bei der das Verbindungselement (58) von der Platte (26) beabstandet ist.

8. Befestigungsanordnung nach Anspruch 1 bis 7, **dadurch gekennzeichnet, dass** jede der ersten und zweiten Konsolen (34, 36) einen Körper (46, 48) hat, der so ausgebildet ist, dass er an mindestens ein von der Gewichtsabstützung (12) abgestütztes Ballastgewicht (14) angrenzt.

9. Befestigungsanordnung nach Anspruch 8, **dadurch gekennzeichnet, dass** jede der ersten und zweiten Konsolen (34, 36) zwischen einem angrenzenden Paar Ballastgewichte (14) angeordnet ist.

10. Befestigungsanordnung nach Anspruch 1 bis 9, **dadurch gekennzeichnet, dass** ein Stützflansch (70, 72) an einer oberen Kante von jeder der ersten und zweiten Konsolen (34, 36) befestigt ist, wobei eine entsprechende Beleuchtungseinheit (82, 84) an den Stützflanschen (70, 72) montiert ist.

## Revendications

1. Ensemble de montage pour le montage d'un article détachable sur un véhicule utilitaire, en particulier un tracteur agricole, l'ensemble de montage (16) comprenant un support de poids (12) conçu pour être monté sur le véhicule utilitaire, l'ensemble de montage étant **caractérisé en ce qu'**il comprend en outre une plaque (26), la plaque (26) étant espacée du support de poids (12) ; un élément d'accouplement (58) attaché à la plaque (26) ; et une paire de premier et second supports de fixation (34, 36), chacun des premier et second supports de fixation (34, 36) comportant une extrémité avant (38, 40) accouplée à l'élément d'accouplement (58) et comportant une extrémité arrière (42, 44) accouplée au support de poids (12), et chacun des premier et second supports de fixation (34, 36) étant accouplé de manière mobile à l'élément d'accouplement (58) de telle sorte qu'un espacement entre les premier et second supports de fixation (34, 36) soit réglable.

2. Ensemble de montage selon la revendication 1, **caractérisé en ce que** l'élément d'accouplement (58) est espacé de la plaque (26), et chacun des premier et second supports de fixation (34, 36) vient en prise de manière coulissante avec l'élément d'accouplement (58).

3. Ensemble de montage selon la revendication 1 ou 2, **caractérisé en ce que** l'élément d'accouplement (58) comprend une tige.

4. Ensemble de montage selon les revendications 1 à 3, **caractérisé en ce que** l'article détachable (20) comprend des première et seconde parois latérales (28, 30) raccordées à des côtés opposés de la plaque (26), un trou de montage (50) de première paroi latérale étant formé dans la première paroi latérale (28), un trou de montage (52) de seconde paroi latérale étant formé dans la seconde paroi latérale (30), un trou (54) de premier support de fixation étant formé dans le premier support de fixation (34), un trou (56) de second support de fixation étant formé dans le second support de fixation (36), l'élément d'accouplement (58) s'étendant à travers l'ensemble desdits trous (50, 52, 54, 56) afin d'attacher les première et seconde parois latérales (28, 30) aux premier et second supports de fixation (34, 36).

5. Ensemble de montage selon les revendications 1 à 4, **caractérisé en ce que** chacun des premier et second supports de fixation (34, 36) comprend une patte (60, 62) qui s'étend latéralement à partir d'une partie avant inférieure des premier et second supports de fixation (34, 36), la patte (60, 62) venant en prise avec une partie inférieure de la plaque (26).

6. Ensemble de montage selon les revendications 1 à 5, **caractérisé en ce que** l'extrémité avant (38, 40) est espacée vers l'intérieur vis-à-vis d'une paroi correspondante parmi les première et seconde parois latérales (28, 30).

7. Ensemble de montage selon les revendications 1 à 6, **caractérisé en ce que** l'élément d'accouplement (58) est espacé de la plaque (26).

8. Ensemble de montage selon les revendications 1 à 7, **caractérisé en ce que** chacun des premier et second supports de fixation (34, 36) comporte un corps (46, 48) qui est conçu pour être adjacent à au moins un poids de lestage (14) supporté par le support de poids (12).

9. Ensemble de montage selon la revendication 8, **caractérisé en ce que** chacun des premier et second supports de fixation (34, 36) est pris en sandwich entre une paire de poids de lestage (14) adjacents.

10. Ensemble de montage selon les revendications 1 à 9, **caractérisé en ce qu'**une patte de fixation (70, 72) est attachée à un bord supérieur de chacun des premier et second supports de fixation (34, 36), une unité d'éclairage (82, 84) correspondante étant montée sur les pattes de fixation (70, 72).
